# FASCICULE DE BREVET EUROPEEN

(11) **EP 0 404 630 B1**
(45) Date de publication et mention de la délivrance du brevet: **26.01.1994**
(21) Numéro de dépôt: 90401599.7
(22) Date de dépôt: 11.06.1990
(51) Int. Cl.: H04L 25/08

(54) **Dispositif de réception d'informations transitant sur deux lignes à couplage capacitif, notamment pour véhicule automobile**
Vorrichtung zum Empfang von über zwei kapazitiv gekoppelte Leitungen durchgehenden Informationen, insbesondere für Kraftfahrzeuge
Device for receiving information supported by two capacitor-coupled lines, especially for vehicles

(30) Priorité: 19.06.1989 FR 8908123
(43) Date de publication de la demande: 27.12.1990
(73) Titulaire: AUTOMOBILES PEUGEOT, 75116 Paris (FR); AUTOMOBILES CITROEN, 92200 Neuilly-sur-Seine (FR); REGIE NATIONALE DES USINES RENAULT, 92109 Boulogne-Billancourt (FR)
(72) Inventeur: Lecocq, Jean-Luc, 92310 - Sevres (FR)
(74) Mandataire: Obolensky, Michel

(56) Documents cités:
- EP-A- 0 318 354
- FR-A- 2 422 288
- US-A- 4 642 807

## Description

La présente invention concerne un dispositif de réception d'informations transitant sur deux lignes de transmission d'informations, à couplage capacitif, notamment pour véhicule automobile.

On connait déjà dans l'état de la technique des dispositifs de réception d'informations de ce type, intégrés dans des modules électroniques utilisés par exemple dans des réseaux de transmission d'informations de véhicules automobiles et comportant un comparateur dont chaque entrée reçoit des signaux d'une ligne de transmission d'informations et qui est polarisée de façon à ce qu'en l'absence d'informations sur la ligne, le dispositif donne en sortie une information privilégiée, appelée état récessif. Un exemple d'un tel dispositif est illustré par le document EP-A-0 318 354.

Dans l'état de la technique, chaque entrée du comparateur est reliée à une ligne de transmission d'informations à travers un condensateur, au plus d'une alimentation à travers une résistance et à la masse à travers une autre résistance.

Les résistances de polarisation des entrées de ce comparateur sont calculées de façon à obtenir des tensions de polarisations différentes aux bornes d'entrée de ce comparateur, tout en maintenant un appairage des résistances et des condensateurs, tel que l'on conserve une constante de temps similaire sur les deux lignes de transmission d'informations.

L'avantage de cette structure est le retour automatique, après décharge des réseaux capacitifs, dans l'état récessif, permettant la poursuite des transmissions par d'autres modules reliés au réseau.

Cependant, ces dispositifs présentent un certain nombre d'inconvénients dans la mesure où la tension d'entrée présente un seuil important, d'où la création, en sortie du comparateur, d'une distorsion temporelle des signaux. Ceci se traduit par exemple par une modification du rapport cyclique des signaux dans le cas d'un codage en modulation de largeur d'impulsions (PWM), préjudiciable à la bonne reconnaissance des signaux et à la bonne synchronisation des messages.

De plus, les constantes de temps des circuits RC formés aux bornes de ce comparateur, sont dépendantes de la fréquence de transmission et du codage des bits.

Le but de l'invention est donc de résoudre ces problèmes en proposant un dispositif de réception d'informations qui soit simple, fiable et dont les signaux de sortie soient exempts de défauts.

A cet effet, l'invention a pour objet un dispositif de réception d'informations transitant sur deux lignes de transmission d'informations, à couplage capacitif, notamment pour véhicule automobile, du type comportant un comparateur dont chaque entrée reçoit des signaux d'une ligne de transmission d'informations, à travers un condensateur, caractérisé en ce que des moyens de commutation forcée sont interposés entre les lignes de transmission d'informations et les entrées du comparateur, la sortie de celui-ci étant reliée à une entrée d'une porte OU dont l'autre entrée reçoit un signal de réinitialisation d'un décodeur de protocole et dont la sortie est reliée d'une part directement et d'autre part à travers un inverseur aux moyens de commutation forcée, pour réinitialiser le comparateur lorsque celui-ci est bloqué dans un état dominant à la suite d'un parasite.

L'invention sera mieux comprise à l'aide de la description qui va suivre, donnée uniquement à titre d'exemple et faite en se référant aux dessins annexés, sur lesquels :
- la Fig.1 représente un schéma synoptique d'un dispositif de réception selon l'invention;
- la Fig.2 représente un mode de réalisation de premiers générateurs de courant entrant dans la constitution d'un dispositif selon l'invention;
- la Fig.3 représente un mode de réalisation de seconds générateurs de courant entrant dans la constitution d'un dispositif selon l'invention; et
- la Fig.4 représente un circuit de réinitialisation d'un dispositif de réception selon l'invention.

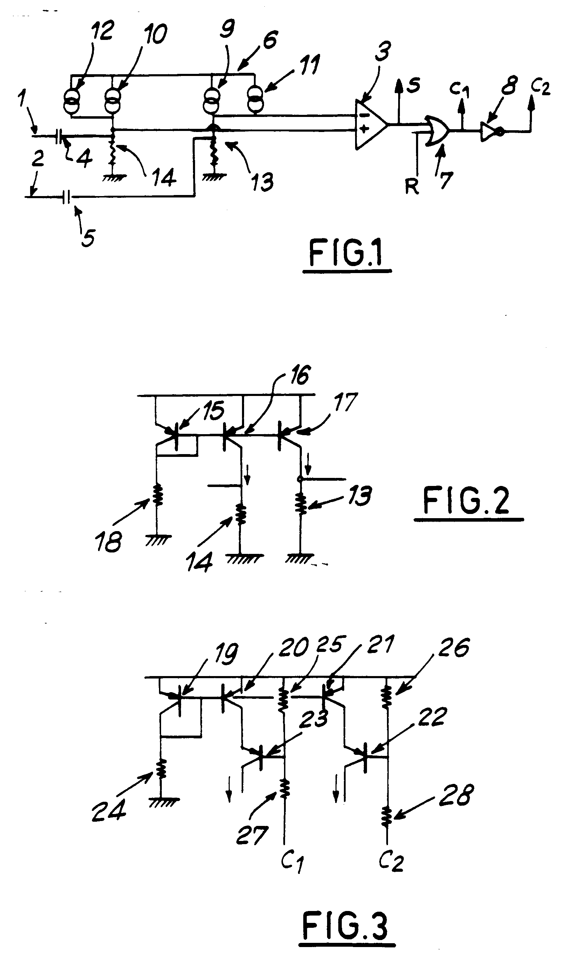

Ainsi qu'on peut le voir sur la Fig. 1 un dispositif de réception d'informations transitant sur deux lignes de transmission d'informations, 1 et 2, et sur lesquelles transitent des informations et leur complément, respectivement, comporte un comparateur 3, constitué par exemple par un comparateur de type classique, dont les entrées non inverseuse et inverseuse sont reliées aux lignes de transmission d'informations 1 et 2, à travers des condensateurs 4 et 5, respectivement.

Des moyens de commutation forcée 6 sont également interposés entre les lignes de transmission d'informations 1 et 2 et les entrées du comparateur 3 et plus particulièrement entre les condensateurs 4 et 5 et les entrées correspondantes du comparateur.

La sortie S du comparateur est reliée à une borne d'entrée d'une porte OU 7 recevant sur son autre borne d'entrée un signal de réinitialisation R provenant d'un décodeur de protocole dont la fonction sera décrite plus en détail par la suite. La sortie de cette porte OU 7 est reliée directement et à travers un inverseur 8 c'est à dire en C1 et C2 respectivement, aux moyens de commutation forcée pour réinitialiser le comparateur 3 lorsque celui-ci est bloqué, par exemple à la suite d'un parasite, comme cela sera décrit plus en détail par la suite.

Les moyens de commutation forcée comprennent pour chaque entrée du comparateur, un premier générateur de courant 9 et 10 et un second générateur commandable de courant 11 et 12 respectivement, pour les entrées inverseuse et non-inverseuse de ce comparateur. Ces entrées sont également reliées à la masse à travers des résistances 13 et 14 respectivement.

Les premiers générateurs de courant 9 et 10 servent à créer une polarisation à chaque entrée du comparateur, tandis que les seconds générateurs de courant 11 et 12 sont des générateurs de courant commandables par les sorties directe et inversée de la porte OU 7, c'est à dire les bornes C1 et C2 décrites précédemment, et qui servent à créer une hytérésis aux bornes de ce comparateur.

Ceci permet de créer un comparateur à offset faible et hytérésis centrée importante, le basculement de la sortie de ce comparateur étant déterminé avec précision en fonction des différents paramètres des moyens de commutation forcée.

L'offset étant faible, les seuils de déclenchement autour de la tension de polarisation sont symétriques et quel que soit le sens de basculement, les signaux en sortie du comparateur présentent des temps de propagation similaires et donc des formes analogues à celles des signaux transitant sur les lignes de transmission d'informations.

En cas de parasitage, le comparateur peut basculer dans un état dominant et en l'absence de tension de décalage, rester dans cette position.

Ce phénomène peut se produire sur tous les autres modules du réseau de transmission par exemple du véhicule. Ces modules vont alors détecter que la ligne de transmission d'informations est occupée (erreur globale) et ne pourront donc pas envoyer de messages, de sorte que la transmission d'informations peut se bloquer.

Pour éviter cette situation, un décodeur de protocole intégré au réseau de transmission d'informations du véhicule, au bout d'un temps déterminé supérieur au temps du niveau dominant le plus long permis par le protocole de transmission, envoie un signal de réinitialisation sur la borne de contrôle du, dispositif, constituée par l'une des bornes d'entrée de la porte OU 7, pour faire basculer le comparateur dans l'état récessif par l'intermédiaire des seconds générateurs de courant des moyens de commutation forcée, et permettre ainsi de réinitialiser une transmission.

En effet, ces seconds générateurs des moyens de commutation forcée sont reliés d'une part aux sorties C1 et C2, respectivement directe et inversée de ce comparateur, et d'autre part aux entrées non-inverseuse et inverseuse de ce comparateur, pour faire basculer celui-ci sous la commande des signaux en C1 et C2, comme c'est le cas par exemple lorsque le décodeur de protocole envoie un signal de réinitialisation R sur la borne d'entrée correspondante de la porte OU 7.

Sur la Fig.2, on a représenté un mode de réalisation des premiers générateurs de courant entrant dans la constitution des moyens de commutation forcée décrits en regard de la Fig.1.

Ces premiers générateurs de courant comprennent un certain nombre de transistors 15,16 et 17 ainsi que les résistances de polarisation 13 et 14 déjà citées précédemment et une autre résistance de polarisation 18.

La Fig.3 représente quant à elle un mode de réalisation des seconds générateurs de courant entrant dans la constitution des moyens de commutation forcée. Ces seconds générateurs de courant comportent également un certain nombre de transistors 19,20,21, 22 et 23 et de résistances 24, 25, 26, 27 et 28, les résistances 27 et 28 étant reliées aux sorties C1 et C2 respectivement décrites en regard de la Fig. 1, pour la commande de ces générateurs et donc du basculement du comparateur.

La structure de ces générateurs de courant étant classique et ne présentant pas de difficultés particulières, on ne les décrira pas plus en détail.

Comme mentionné précédemment, les moyens de commutation forcée permettent de réaliser un comparateur à offset faible et hystérésis centrée importante permettant d'obtenir des signaux de sortie exempts de défauts.

L'offset est donné par l'appairage des résistances et l'imprécision des générateurs de courant.

Par ailleurs, si les générateurs de courant sont intégrés sur un même substrat, les valeurs de ceux-ci peuvent être très proches.

Dans la pratique, une valeur d'offset inférieure à 30 millivolts peut être utilisée et la valeur de l'hystérésis peut être égale en pratique à 150 millivolts.

Ainsi qu'on l'a mentionné précédemment, la sortie du comparateur 3 qui attaque la porte OU 7 conjointement avec une entrée de réinitialisation provenant du décodeur de protocole, permet, lorsque le comparateur est bloqué, en raison par exemple d'un parasite et en l'absence de transmission, de réinitialiser ce comparateur en forçant l'une ou l'autre des entrées du comparateur par le second générateur de courant commandable 11 ou 12 correspondant et de relancer la transmission d'informations.

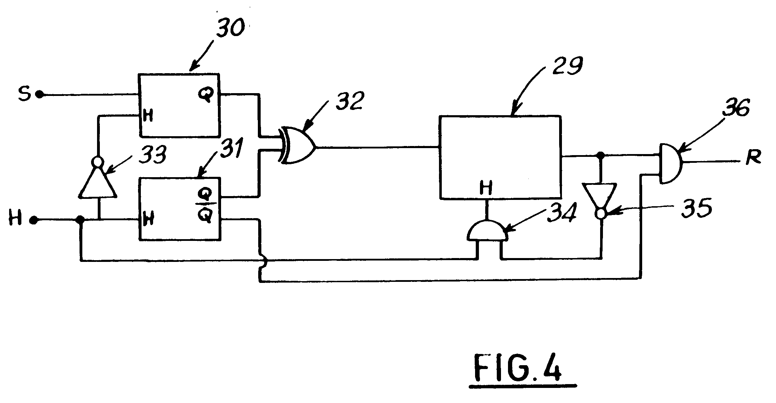

Cette réinitialisation est effectuée par exemple grâce au circuit représenté sur la Fig.4. Ce circuit reçoit un signal d'entrée S et un signal d'horloge H, et comporte une partie de comptage, une partie de réinitialisation et une partie de remise en forme des signaux.

La partie de comptage comporte un ou plusieurs compteurs 29 montés en cascade et reliés à des moyens de réinitialisation comportant des bascules 30 et 31 recevant en entrée les signaux S et H et dont les sorties Q sont reliées aux entrées d'une porte OU 32. La sortie de cette porte est reliée au compteur 29. La bascule 30 reçoit également en entrée,le signal d'horloge H à travers un inverseur 33.

Ainsi, à chaque changement d'état du signal S, un signal de réinitialisation est émis vers les moyens de comptage.

Le compteur 29 reçoit sur son entrée d'horloge H un signal de sortie d'une porte ET 34 recevant en entrée le signal H et le signal de sortie du compteur 29 à travers un inverseur 35, pour bloquer ce compteur lorsque la valeur de comptage prédéterminée est atteinte.

La sortie du compteur 29 est également reliée à l'entrée d'une porte ET 36, dont l'autre entrée reçoit le signal d'entrée S inversé à travers la bascule 31. Ceci permet d'engendrer un signal de réinitialisation à la sortie R de cette porte 36, dans le cas où le signal S reste à 0 trop longtemps et permet de débloquer le comparateur pour le ramener dans un état récessif.

Bien entendu, d'autres modes de réalisation de ces moyens peuvent être envisagés.

## Revendications

1. Dispositif de réception d'informations transitant sur deux lignes de transmission d'informations (1,2), à couplage capacitif, notamment pour véhicule automobile, du type comportant un comparateur (3) dont chaque entrée reçoit des signaux d'une ligne de transmission d'informations (1,2) à travers un condensateur (4,5), caractérisé en ce que des moyens de commutation forcée (6) sont interposés entre les lignes de transmission d'informations (1,2) et les entrées du comparateur (3), la sortie de celui-ci étant reliée à une entrée d'une porte OU(7) dont l'autre entrée reçoit un signal de réinitialisation (R) d'un décodeur de protocole et dont la sortie est reliée d'une part directement et d'autre part à travers un inverseur (8) aux moyens de commutation forcée (6) pour réinitialiser le comparateur, lorsque celui-ci est bloqué dans un état dominant à la suite d'un parasite.

2. Dispositif selon la revendication 1, caractérisé en ce que les moyens de commutation forcée comprennent, reliés à chaque entrée du comparateur (3), un premier générateur de courant (9,10) de polarisation de l'entrée correspondante du comparateur (3), et un second générateur de courant (11,12), commandable par la sortie directe (C1) ou inversée (C2) de la porte OU(7), adapté pour créer une hystérésis centrée aux bornes du comparateur (3).

## Patentansprüche

1. Vorrichtung zum Empfang von über zwei kapazitiv gekoppelte Informationsübertragungsleitungen (1, 2) durchgehenden Informationen, insbesondere für Kraftfahrzeuge, derart, daß sie einen Komparator (3) aufweist, von dem jeder Eingang Signale einer Informationsübertragungsleitung (1, 2) über einen Kondensator (4, 5) empfängt, dadurch gekennzeichnet, daß Mittel zur Zwangskommutierung (6) zwischen den Informationsübertragungsleitungen (1, 2) und den Eingängen des Komparators (3) zwischengeschaltet sind, wobei der Ausgang von diesem mit einem Eingang einer Türe OU (7) verbunden ist, deren anderer Eingang ein Reinitialisierungssignal (R) eines Protokolldekoders empfängt und deren Ausgang einerseits direkt und andererseits durch einen Umschalter (8) mit den Mitteln der Zwangskommutierung (6) verbunden ist, um den Komparator zu reinitialisieren, wenn dieser in einem dominierenden Zustand infolge eines Störsignals blockiert ist.

2. Vorrichtung gemäß Anspruch 1, dadurch gekennzeichnet, daß die Mittel der Zwangskommutierung, verbunden mit jedem Eingang des Komparators (3) einen ersten Stromgenerator (9, 10) der Polarisierung des entsprechenden Eingangs des Komparators (3) aufweisen, und einen zweiten Stromgenerator (11, 12), der von dem direkten (C1) oder umgeschalteten (C2) Ausgang der Tür OU (7) steuerbar ist, und der angepaßt ist, um eine zentrierte Hysterese an den Klemmen des Komparators (3) herzustellen.

## Claims

1. Device for receiving information travelling on two capacitively coupled information transmission lines (1, 2), in particular for a motor vehicle, of the type comprising a comparator (3) each input of which receives signals from an information transmission line (1, 2) through a capacitor (4, 5), characterised in that means (6) for forced switching are interposed between the information transmission lines (1, 2) and the inputs of the comparator (3), the output of the latter being connected to one input of an OR gate (7) whose other input receives a reinitialization signal (R) from a protocol decoder and whose output is connected on the one hand directly and on the other hand through an inverter (8) to the means (6) for forced switching in order to reinitialize the comparator, when the latter is blocked in a dominant state following interference.

2. Device according to Claim 1, characterised in that the means for forced switching comprise, connected to each input of the comparator (3), a first current generator (9, 10) for biasing the corresponding input of the comparator (3), and a second current generator (11, 12), controllable by the direct (C1) or inverted (C2) output of the OR gate (7), which generator is adapted in order to create a hysteresis centered at the terminals of the comparator (3).
